# EUROPÄISCHE PATENTSCHRIFT

(11) **EP 1 576 348 B1**
(45) Veröffentlichungstag und Bekanntmachung des Hinweises auf die Patenterteilung: **24.03.2010**
(21) Anmeldenummer: 03813524.0
(22) Anmeldetag: 18.08.2003
(51) Int. Cl.: G01L 7/08

(54) **(HOCH) DRUCKSENSOR MIT DRUCKBELASTUNG DER BEFESTIGUNG**
(HIGH) PRESSURE SENSOR FEATURING PRESSURE LOADING OF THE FASTENING ELEMENT
CAPTEUR (HAUTE) PRESSION A SOLLICITATION PAR PRESSION DE LA FIXATION

(30) Priorität: 19.12.2002 DE 10260105
(43) Veröffentlichungstag der Anmeldung: 21.09.2005
(73) Patentinhaber: ROBERT BOSCH GMBH, 70442 Stuttgart (DE)
(72) Erfinder: SCHAEFER, Frank, 72070 Tuebingen (DE); WEBER, Heribert, 72622 Nuertingen (DE); BENZEL, Hubert, 72124 Pliezhausen (DE); MUCHOW, Joerg, 72124 Pliezhausen (DE)
(86) Internationale Anmeldenummer: PCT/DE2003/002756
(87) Internationale Veröffentlichungsnummer: WO 2004/057290

(56) Entgegenhaltungen:
- EP-A- 0 427 261
- EP-A- 0 488 446
- EP-A- 0 735 353
- DE-A- 3 913 031
- DE-A- 10 014 634
- DE-A- 19 929 026
- FR-A- 2 786 564
- JP-A- 61 132 832
- E.BOSE: "Fluid Pressur Transducers" ELECTRONIC ENGINEERING, Bd. 53, Nr. 659, 1981, Seite 169 XP002029075 London (GB)

## Beschreibung

### Stand der Technik

Die Erfindung geht aus von einem Drucksensor nach der Gattung des Hauptanspruchs. Es sind bereits mikromechanische Siliziumdrucksensoren bekannt, wobei durch die Einbringung einer Kaverne in einem Siliziumchip eine Membran erzeugt wird. Ein solcher Siliziumsensor ist beispielsweise in der deutschen Offenlegungsschrift DE 199 57 556 offenbart. Hierbei wird die Kaverne beispielsweise durch anisotropes KOH-Ätzen erzeugt.

In der Schrift EP 0 427 261 A1 wird ein Drucksensorelement beschrieben, welches mit einem Trägerelement verbunden ist. Die Verbindung erfolgt dabei dadurch, dass in dem Trägerelement eine Aussparung vorgesehen ist, in der das Drucksensorelement plan aufgelegt bzw. verbunden wird.

Weiterhin ist aus der Schrift JP 61132832 A ein Drucksensorelement bekannt, welches ebenfalls plan an einem Befestigungselement befestigt ist, welches seinerseits auf ein Trägerelement aufgebracht ist.

Die Schrift DE 199 29 026 A1 zeigt ein Verfahren zur Herstellung eines Drucksensors, bei dem zum Schutz der Membran eines Drucksensorelements ein Stempel auf die Membran aufgelegt wird, bevor das Drucksensorelement mit einer Spritzmasse umgeben wird.

### Vorteile der Erfindung

Der erfindungsgemäße Drucksensor mit den Merkmalen des Hauptanspruchs hat demgegenüber den Vorteil, dass ein einfacher und kostengünstiger Aufbau für die Herstellung eines Drucksensors vorgeschlagen wird. Insbesondere dient der erfindungsgemäße Drucksensor der Messung hoher Drücke, wobei der erfindungsgemäße Drucksensor dennoch eine hohe Überlastsicherheit aufweist. Weiterhin ist es erfindungsgemäß auch möglich, den Drucksensor für geringe Drücke einzusetzen. Dadurch hat der erfindungsgemäße Drucksensor den Vorteil, dass eine kostengünstige Herstelllung eines mikromechanischen Sensors für geringe bis hohe Drücke (bis bzw. über 1000 bar) möglich ist. Damit ist es möglich, kostengünstig einen Drucksensor bereitzustellen, der für eine große Bandbreite von unterschiedlichen Drücken einsetzbar ist. Dadurch können die Stückzahlen erhöht werden und die Kosten weiter gesenkt werden. Durch die erfindungsgemäße Anordnung ist es weiterhin möglich, eine Trennung von Druckmedium und Auswerteschaltung zu bewirken. Insbesondere ist es von Vorteil, dass die Verbindungen zwischen dem ersten und dem zweiten Befestigungsbereich nur auf Druck belastet werden. Dies bedeutet, dass die Kraftwirkung, die auf den Membranbereich zur Messung eines Drucks wirkt, die Wirkung hat, dass der erste Befestigungsbereich auf den zweiten Befestigungsbereich hin gedrückt wird.

Durch die in den Unteransprüchen aufgeführten Maßnahmen sind vorteilhafte Weiterbildungen und Verbesserungen des im Hauptanspruch angegebenen Drucksensors möglich.

Besonders vorteilhaft ist, dass das Drucksensorelement aus Halbleitermaterial und/oder in Bulkmikromechanik hergestellt vorgesehen ist. Dadurch ist es möglich, das Drucksensorelement und damit den Drucksensor besonders kostengünstig und betriebssicher herzustellen. Weiterhin ist es von Vorteil, dass der Drucksensor für hohe Drücke bis ca. 1000 bar bzw. für hohe Drücke über 1000 bar vorgesehen ist. Dadurch ist der Drucksensor besonders kostengünstig und wegen der Verwendbarkeit in einem großen Druckbereich in großen Stückzahlen herstellbar. Weiterhin ist es von Vorteil, dass das Befestigungselement hinsichtlich seines Temperaturausdehnungskoeffizienten an das Sensorelement angepasst vorgesehen ist. Dadurch ist es möglich, dass durch Temperaturschwankungen nur geringe Spannungen in das Sensorelement eingebracht werden bzw. dass der Drucksensor nicht nur in einem großen Druckbereich sondern auch in einem großen Temperaturbereich verwendbar ist. Weiterhin ist es von Vorteil, dass zwischen dem ersten Befestigungsbereich und dem zweiten Befestigungsbereich ein Verbindungsmaterial vorgesehen ist, wobei das Verbindungsmaterial insbesondere vergleichsweise weich vorgesehen ist. Dadurch können mechanische Spannungen aufgrund von Temperaturschwankungen ebenfalls gut ausgeglichen werden. Weiterhin ist es von Vorteil, dass im Membranbereich Widerstandselemente vorgesehen sind. Dadurch ist es mit einfachen Mitteln und damit kostengünstig möglich, Drücke in großen Druckbereichen zu messen. Weiterhin ist es von Vorteil, dass die Verbindungsfläche zwischen dem ersten Befestigungsbereich und dem zweiten Befestigungsbereich parallel oder schräg bzw. in einem spitzen Winkel zur Membranebene vorgesehen ist. Dadurch ergeben sich vielfältige Variationsmöglichkeiten des erfindungsgemäßen Drucksensors. Weiterhin ist es von Vorteil, dass sich der Querschnitt des Befestigungselements zum zweiten Befestigungsbereich hin verjüngt. Dadurch ist es möglich, den Sensorchip in einfacher Weise zentriert zu montieren.

### Zeichnung

Ausführungsbeispiele der Erfindung sind in der Zeichnung dargestellt und in der nachfolgenden Beschreibung näher erläutert.

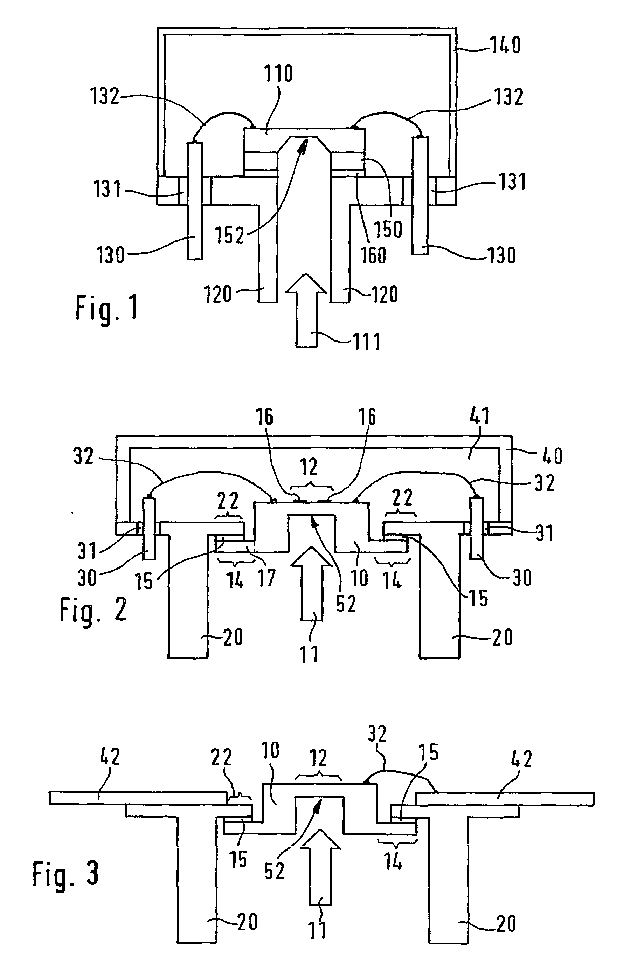

Es zeigen Figur 1 einen bekannten mikromechanischen Siliziumdrucksensor nach dem Stand der Technik,
Figur 2 ein erfindungsgemäßer Drucksensor als Absolutdrucksensor,
Figur 3 ein erfindungsgemäßer Drucksensor als Relativdrucksensor,
Figur 4 verschiedene Zwischenschritte zur Herstellung des Sensorelementes,
Figur 5 eine erste Aufbauvariante des erfindungsgemäßen Sensors und
Figur 6 eine zweite Aufbauvariante des erfindungsgemäßen Sensors.

### Beschreibung der Ausführungsbeispiele

In Figur 1 ist der allgemein übliche Aufbau von mikromechanischen Siliziumdrucksensoren dargestellt. Ein Siliziumsubstrat 110 ist mit einer Kaverne 152 versehen, welche eine nicht näher mit einem Bezugszeichen versehene Membran stehen lässt. Das Siliziumsubstrat 110 ist mit einem mit einer Bohrung versehenen Glas 150 verbunden, welches mit einem Lot 160 auf einen Sockel 120 gelötet ist. Der Sockel 120 ist einstückig mit einem Druckanschlussrohr 120 verbunden. Weiterhin sind nicht näher mittels eines Bezugszeichens versehene und auf der Oberseite des Siliziumsubstrats 110 befindliche Messwiderstände über einen oder mehrere Bonddrähte 132 mit einem Anschlussstift 130 verbunden, welche mittels einer Einglasung 131 von dem Sockel 120 elektrisch getrennt sind. Die Kaverne 152 des Siliziumsubstrats 110 weist eine typische Ätzschräge auf, die in etwa pyramidenstumpfartig geformt ist. Hierdurch ergibt sich ein trapezförmiger Querschnitt. Diese pyramidenstumpfförmige Aussparung unterhalb der Sensormembran ergibt sich bei der Verwendung eines Siliziumsubstrats, welches eine (100)-Orientierung aufweist, weil eine KOH-Ätzung unterschiedliche Ätzraten in unterschiedliche Kristallrichtungen aufweist. Als nachteilig erweist sich bei dem bekannten Drucksensor, dass als Druckangriffsfläche die pyramidenstumpfförmige Aussparung an ihrem größten Querschnitt, d.h. an der Rückseite des Siliziumsubstrats, maßgebend ist. Dadurch wirken große Zugkräfte auf das Glas 150 und das Lot 160. Hierdurch weist der Siliziumsensor beim Stand der Technik nur einen vergleichsweise geringen Berstdruck auf. Drucksensoren werden oft in Bulkmikromechanik hergestellt und auf Glas anodisch gebondet. Zur Rückseitendruckbeaufschlagung wird der Sensor auf einen gelochten Sockel gelötet. Bei Druckbeaufschlagung werden das Glas und die Verbindungsstellen Silizium-Glas und Glas-Lot-Sockel stark auf Zug belastet, so dass Druckbelastungen über 100 bar nur schwer zu realisieren sind. Für höhere Drücke werden teure Aufbaukonzepte verwendet, die z.T. eine Metallmembran verwenden (z.B. Dünnschicht auf Metallmembran, mikromechanischer Drucksensor mit Ölvorlage).

In Figur 2 ist ein Drucksensor dargestellt. Ein Drucksensorelement 10, welches insbesondere aus einem Halbleitermaterial und hier insbesondere aus Silizium vorgesehen ist, weist auf einer Vorderseite ein Membranbereich 12 auf. Auf der Rückseite des Membranbereichs 12 ist im Drucksensorelement 10 eine geätzte Kaverne 52 ausgebildet, die insbesondere mittels eines Trenchätzverfahrens von der Rückseite in das Drucksensorelement 10 eingebracht wurde. In Figur 2 sind mit dem Bezugszeichen 16 Messwiderstände auf dem Membranbereich 12 des Drucksensorelements 10 angedeutet, die jedoch in den weiteren Figuren der Einfachheit halber nicht dargestellt, jedoch mitzudenken sind. Das Drucksensorelement 10 weist in Figur 2 im Bereich seiner Rückseite einen Befestigungsbereich 14 auf, der im folgenden als erster Befestigungsbereich 14 bezeichnet wird. Der Drucksensorchip 10, d.h. das Drucksensorelement 10, wird in der in Figur 2 dargestellten Ausführungsform insbesondere so hergestellt, dass er seitliche Auskragungen 17 hat, mittels derer er in bzw. an einem Sockel 20 befestigt werden kann. Bei dieser Befestigungsart treten bei Druckbeaufschlagung nur Druckspannungen auf. Die durch die Druckbeaufschlagung auf das Drucksensorelement 10 ausgeübte Kraft ist in Figur 2 mit einem Pfeil und dem Bezugszeichen 11 dargestellt.

Zur Herstellung des Drucksensors wird das Drucksensorelement 10 mit dem Sockel 20 verbunden, wobei der Sockel 20 im Folgenden auch als Befestigungselement 20 bezeichnet wird. Das Befestigungselement 20 weist ebenfalls einen Befestigungsbereich 22 insbesondere im Bereich des zuvor erwähnte Auskragung 17 auf, der im folgenden als zweiter Befestigungsbereich 22 bezeichnet wird. Zwischen dem ersten Befestigungsbereich 14 und dem zweiten Befestigungsbereich 22 ist ein Verbindungsmaterial 15 vorgesehen. Als Verbindungsmaterial 15 können z.B. Lote (Metall, Glas) oder Kleber verwendet werden. Bevorzugt besteht der Sockel 20 aus dem Material Kovar und ist somit bzgl. seines thermischen Ausdehnungskoeffizienten an den thermischen Ausdehnungskoeffizienten des Materials des Drucksensorelements 10, d.h. insbesondere an Silizium, angepasst. Da das bevorzugte Sockelmaterial Kovar schlecht bearbeitbar ist, wird der Sockel 20 bevorzugt mittels der Technik des "metal injection molding" hergestellt. Das Verbindungsmaterial 15 ist bevorzugt relativ weich, um mechanische Spannungen bei Temperaturwechseln abzufangen.

In Figur 2 ist eine Ausführungsform des Drucksensors als Absolutdrucksensor dargestellt. Hierbei ist eine vakuumdichte Kappe 40 um die Vorderseite des Drucksensorelements 10 vorgesehen. Der Sockel 20 umfasst wiederum in seinem unteren Teil und nicht näher mit einem Bezugszeichen dargestellt ein Druckanschlussrohr. Weiterhin sind die auf der Oberseite des Drucksensorelements 10 befindlichen Messwiderstände 12 über einen oder mehrere Bonddrähte 32 mit einem oder mehreren Anschlussstift(en) 30 verbunden, welche mittels einer Einglasung 31 von dem Sockel 20 elektrisch getrennt sind. Die Kappe 40 umschließt ein Referenzvolumen 41, das beispielsweise evakuiert vorgesehen ist. Dadurch kann der Absolutdruck auf der Rückseite des Drucksensorelements 10, d.h. auf der dem Referenzvolumen 41 abgewandten Seite des Drucksensorelements 10, gemessen werden.

In Figur 3 ist ein Drucksensor als Relativdrucksensor dargestellt. Wiederum ist das Drucksensorelement 10 mit seinem ersten Befestigungsbereich 14 und seinem Membranbereich 12 dargestellt. Weiterhin ist wiederum der Sockel 20 mit seinem zweiten Befestigungsbereich 22 dargestellt. Weiterhin ist wiederum das Verbindungsmaterial 15 zwischen dem ersten und dem zweiten Befestigungsbereich 14, 22 und die auf das Drucksensorelement 10 ausgeübte Druckkraft 11 bzw. Kraftwirkung 11 dargestellt. In Figur 3 ist mit dem Bezugszeichen 42 eine Leiterplatte dargestellt. Die elektrischen Zuführungen zwischen der Leiterplatte 42 und dem Drucksensorelement 10 sind wiederum über Bonddrähte 32 realisiert. Die Leiterplatte 42 kann erfindungsgemäß auch als Hybrid 42 vorgesehen sein.

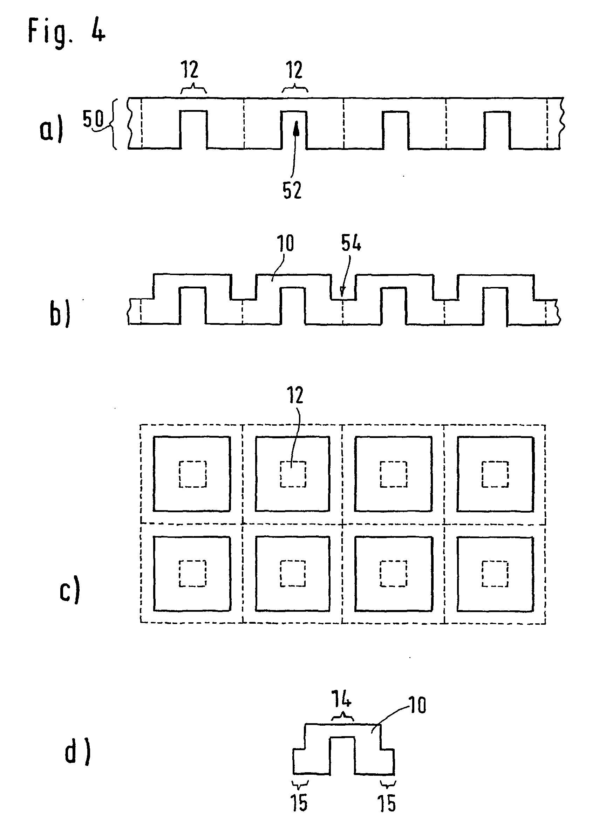

In Figur 4 sind verschiedene Zwischenschritte zur Herstellung des Sensorelementes 10 dargestellt. Ein Substrat 50, insbesondere ein Halbleitersubstrat 50 als bevorzugtes Material für das Sensorelement 10, wird gemäß bekannten Verfahren prozessiert. Hierbei wird insbesondere eine Kaverne 52 in die Rückseite des zukünftigen Drucksensorelements 10 geätzt, vgl. Figur 4a. Hierbei findet erfindungsgemäß insbesondere ein Trenchätzverfahren oder ein - wie im Zusammenhang mit Figur 1 erläutert - KOH-Ätzverfahren Anwendung. Durch die Ätzung der Kaverne 52 entsteht im Bereich der Vorderseite des zukünftigen Drucksensorelements 10 der Membranbereich 12. In einer bevorzugten Ausführungsform der Erfindung werden vor dem Ätzen der Kaverne 52 auf der Vorderseite des zukünftigen Drucksensorelements 10 piezoresistive Widerstände auf der Membran und ggf. zusätzlich eine integrierte Auswerteschaltung im Substrat 50 neben der Membran erzeugt. Weder die Widerstände noch die Auswerteschaltung sind jedoch in Figur 4 dargestellt. In Figur 4b ist ein weiterer Schritt zu Herstellung der Drucksensorelemente 10 dargestellt: von der Vorderseite her werden Einkerbungen 54 realisiert. Figur 4a und Figur 4b stellen jeweils Seitenansichten des erfindungsgemäßen Drucksensorelements 10 entlang eines Schnittes durch den Membranbereich 12 dar. Die Einkerbungen 54 werden erfindungsgemäß insbesondere durch Ätztechniken wie Hochratentrechätzen oder durch Sägen mit einem breiten Sägeblatt hergestellt. Die Form der Einkerbungen, wie zum Beispiel quadratisch, rund, etc., ist dabei frei wählbar. In Figur 4c ist eine Draufsicht auf eine Anzahl von solchermaßen vorbereiteten zukünftigen Drucksensorelementen 10 dargestellt, wobei der Membranbereich 12 besonders hervorgehoben ist.

Im Anschluss an diese Vorbereitungsschritte werden die noch zusammenhängenden (vgl. Figuren 4a-4c) Drucksensorelemente 10 vereinzelt. Bevorzugt erfolgt dies mittels Sägen mit einem sehr dünnen Sägeblatt. Das so erhaltene Drucksensorelement 10, das im folgenden auch als Drucksensorchip 10 bzw. als Sensorchip 10 bezeichnet wird, kann nun in einem in den Figuren 2 und 3 gezeigten Sockel 20 montiert werden.

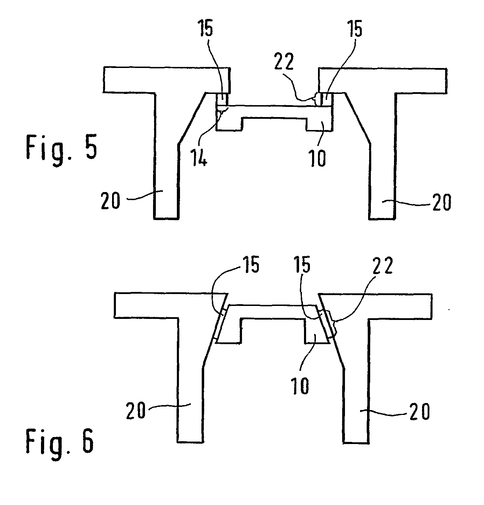

In den Figuren 5 und 6 sind Varianten eines erfindungsgemäßen Drucksensors dargestellt. Als eine erste Variante (in Figur 5 dargestellt) kann der Sensorchip 10 ohne eine Einkerbung, d.h. ohne die in Figur 2 dargestellten Auskragung 17, montiert werden. In diesem Fall befindet sich der erste Befestigungsbereich 14 am Rande des Sensorchips 10 neben dem Membranbereich 12 auf der Vorderseite des Sensorchips 10. Der Sockel besitzt in diesem Fall bevorzugt eine schräg zulaufende Führung, die die zentrische Montage des Drucksensorchips 10 erleichtert.

In einer zweiten Variante (in Figur 6 dargestellt) des erfindungsgemäßen Drucksensors wird mittels eines speziellen Sägeblatts der Sensorchip 10 mit einer schrägen Sägekante hergestellt. Dadurch kann der Chip selbstzentriert montiert werden. Dies hat zur Folge, dass die Verbindungsfläche zwischen dem ersten Befestigungsbereich 14 und dem zweiten Befestigungsbereich 22 gegenüber der Ebene der Membran des Sensorchips 10 geneigt ist, d.h. einen spitzen Winkel bildet. In den Figuren 2, 3 und 5 sind die Verhältnisse jeweils so, dass die angesprochene Verbindungsfläche parallel zur Ebene der Membran des Sensorchips 10 ist.

In beiden Varianten des erfindungsgemäßen Drucksensors ist der Sockel 20 jeweils von seiner Rückseite her so vorgesehen, dass sich der Querschnitt des Sockels 20 in Richtung auf den zweiten Befestigungsbereich 22 hin verjüngt. Dadurch ergibt sich die angesprochene zentrische Montierbarkeit des Drucksensorchips 10.

## Patentansprüche

1. Drucksensor mit einem Drucksensorelement (10) und einem Befestigungselement (20),
wobei das Drucksensorelement (10)
- einen Membranbereich (12) und
- einen ersten Befestigungsbereich (14) auf der Vorderseite des Drucksensorelements (10)
aufweist,
wobei das Befestigungselement (20)
- einen Anschluss zur Druckführung und
- einen zweiten Befestigungsbereich (22)
aufweist,
wobei zur Befestigung des Drucksensorelements (10) der erste Befestigungsbereich (14) mit dem zweiten Befestigungsbereich (22) des Befestigungselements (20) verbunden ist,
**dadurch gekennzeichnet, dass**
sich der Querschnitt der Druckzuführung des Befestigungselements (20) zum zweiten Befestigungsbereich (22) hin verjüngt.

2. Drucksensor nach Anspruch 1, **dadurch gekennzeichnet, dass** die Verjüngung der Druckzuführung das Drucksensorelement in der Druckzuführung zentriert.

3. Drucksensor nach Anspruch 1, **dadurch gekennzeichnet, dass** das Drucksensorelement (10) eine schräge Kante aufweist, wobei insbesondere vorgesehen ist, dass die schräge Kante des Drucksensorelements (10) der Verjüngung der Druckzuführung entspricht.

4. Drucksensor nach Anspruch 1, **dadurch gekennzeichnet, dass** das Drucksensorelement (10) eine Kaverne (52) und eine Membran aufweist, wobei die Wände der Kaverne und die Membran einen Winkel von nahezu 90° aufweisen.

5. Drucksensor nach Anspruch 1, **dadurch gekennzeichnet, dass** das Drucksensorelement (10) aus Halbleitermaterial (50) und/oder in Bulkmikromechaniktechnologie hergestellt ist.

6. Drucksensor nach einem der vorhergehenden Ansprüche, **dadurch gekennzeichnet, dass** der Drucksensor Drücke bis ca. 1000 bar erfasst.

7. Drucksensor nach einem der vorhergehenden Ansprüche, **dadurch gekennzeichnet, dass** der Drucksensor Drücke über 1000 bar erfasst.

8. Drucksensor nach einem der vorhergehenden Ansprüche, **dadurch gekennzeichnet, dass** das Befestigungselement (20) hinsichtlich seines Temperaturausdehnungskoeffizienten an das Sensorelement (10) angepasst ist.

9. Drucksensor nach einem der vorhergehenden Ansprüche, **dadurch gekennzeichnet, dass** der Drucksensor zwischen dem ersten Befestigungsbereich (14) und dem zweiten Befestigungsbereich ein Verbindungsmaterial (15) aufweist ist, wobei das Verbindungsmaterial (15) insbesondere vergleichsweise weich ist, d.h. thermisch induzierte mechanische Spannungen abfängt.

10. Drucksensor nach einem der vorhergehenden Ansprüche, **dadurch gekennzeichnet, dass** die Verbindungsfläche zwischen dem ersten Befestigungsbereich (14) und dem zweiten Befestigungsbereich (22) einen spitzen Winkel zur Membranebene aufweist.

## Claims

1. Pressure sensor with a pressure sensor element (10) and a fastening element (20),
the pressure sensor element (10) having
- a membrane region (12) and
- a first fastening region (14) on the front side of the pressure sensor element (10),
the fastening element (20) having
- a port for controlling pressure and
- a second fastening region (22),
the first fastening region (14) being connected to the second fastening region (22) of the fastening element (20) to fasten the pressure sensor element (10),
**characterized in that**
the cross section of the pressure feed of the fastening element (20) tapers towards the second fastening region (22).

2. Pressure sensor according to Claim 1, **characterized in that** the tapering of the pressure feed centres the pressure sensor element in the pressure feed.

3. Pressure sensor according to Claim 1, **characterized in that** the pressure sensor element (10) has a sloping edge, it being provided in particular that the sloping edge of the pressure sensor element (10) corresponds to the tapering of the pressure feed.

4. Pressure sensor according to Claim 1, **characterized in that** the pressure sensor element (10) has a cavity (52) and a membrane, the walls of the cavity and the membrane forming an angle of virtually 90°.

5. Pressure sensor according to Claim 1, **characterized in that** the pressure sensor element (10) is produced from semiconductor material (50) and/or by bulk micromechanical technology.

6. Pressure sensor according to one of the preceding claims, **characterized in that** the pressure sensor senses pressures up to about 1000 bar.

7. Pressure sensor according to one of the preceding claims, **characterized in that** the pressure sensor senses pressures over 1000 bar.

8. Pressure sensor according to one of the preceding claims, **characterized in that** the fastening element (20) is adapted in terms of its coefficient of thermal expansion to the sensor element (10).

9. Pressure sensor according to one of the preceding claims, **characterized in that** the pressure sensor has a connecting material (15) between the first fastening region (14) and the second fastening region, the connecting material (15) being in particular comparatively soft, i.e. it absorbs thermally induced mechanical stresses.

10. Pressure sensor according to one of the preceding claims, **characterized in that** the connecting area between the first fastening region (14) and the second fastening region (22) forms an acute angle in relation to the plane of the membrane.

## Revendications

1. Capteur de pression comprenant un élément de capteur de pression (10) et un élément de fixation (20),
l'élément de capteur de pression (10) présentant
- une région de membrane (12) et
- une première région de fixation (14) sur le côté avant de l'élément de capteur de pression (10),
l'élément de fixation (20) présentant
- un raccord de guide de pression et
- une deuxième région de fixation (22),
la première région de fixation (14) étant connectée à la deuxième région de fixation (22) de l'élément de fixation (20) pour la fixation de l'élément de capteur de pression (10),
**caractérisé en ce que**
la section transversale du guide d'alimentation en pression de l'élément de fixation (20) se rétrécit vers la deuxième région de fixation (22).

2. Capteur de pression selon la revendication 1, **caractérisé en ce que** le rétrécissement du guide d'alimentation en pression centre l'élément de capteur de pression dans le guide d'alimentation en pression.

3. Capteur de pression selon la revendication 1, **caractérisé en ce que** l'élément de capteur de pression (10) présente une arête oblique, et il est prévu en particulier que l'arête oblique de l'élément de capteur de pression (10) corresponde au rétrécissement du guide d'alimentation en pression.

4. Capteur de pression selon la revendication 1, **caractérisé en ce que** l'élément de capteur de pression (10) présente une cavité (52) et une membrane, les parois de la cavité et la membrane formant un angle de pratiquement 90°.

5. Capteur de pression selon la revendication 1, **caractérisé en ce que** l'élément de capteur de pression (10) est fabriqué en matériau semi-conducteur (50) et/ou en une technologie de micromécanique granulaire.

6. Capteur de pression selon l'une quelconque des revendications précédentes, **caractérisé en ce que** le capteur de pression détecte des pressions jusqu'à environ 1000 bar.

7. Capteur de pression selon l'une quelconque des revendications précédentes, **caractérisé en ce que** le capteur de pression détecte des pressions supérieures à 1000 bar.

8. Capteur de pression selon l'une quelconque des revendications précédentes, **caractérisé en ce que** l'élément de fixation (20) est adapté à l'élément de capteur (10) en termes de son coefficient de dilatation thermique.

9. Capteur de pression selon l'une quelconque des revendications précédentes, **caractérisé en ce que** le capteur de pression présente entre la première région de fixation (14) et la deuxième région de fixation, un matériau de connexion (15), le matériau de connexion (15) étant en particulier relativement mou, c'est-à-dire qu'il reçoit les tensions mécaniques induites thermiquement.

10. Capteur de pression selon l'une quelconque des revendications précédentes, **caractérisé en ce que** la surface de connexion entre la première région de fixation (14) et la deuxième région de fixation (22) présente un angle aigu par rapport au plan de la membrane.
